# EUROPÄISCHE PATENTSCHRIFT

(11) **EP 3 460 414 B1**
(45) Veröffentlichungstag und Bekanntmachung des Hinweises auf die Patenterteilung: **04.03.2020**
(21) Anmeldenummer: 18196023.8
(22) Anmeldetag: 21.09.2018
(51) Int. Cl.: G01D 11/24

(54) **GEHÄUSTER SENSOR MIT ELEKTRISCHEM ANSCHLUSS**
HOUSED SENSOR WITH ELECTRICAL CONNECTION ELEMENTS
CAPTEUR DISPOSÉ DANS UN BOÎTIER À RACCORDEMENT ÉLECTRIQUE

(30) Priorität: 21.09.2017 DE 102017121906
(43) Veröffentlichungstag der Anmeldung: 27.03.2019
(73) Patentinhaber: First Sensor Mobility GmbH, 01099 Dresden (DE)
(72) Erfinder: PETERSEN, Lars, 01129 Dresden (DE); HAGEDORN, Sebastian, 01309 Dresden (DE)
(74) Vertreter: Lippert Stachow Patentanwälte Rechtsanwälte Partnerschaft mbB

(56) Entgegenhaltungen:
- EP-A1- 3 163 278
- EP-A2- 2 312 290
- DE-A1- 2 350 252
- DE-A1- 2 841 771
- US-A1- 2013 068 004

## Beschreibung

Die Erfindung betrifft allgemein einen Sensor zur Erfassung einer physikalischen oder chemischen Eigenschaft aus der Umgebung des Sensors, welcher ein Gehäuse (gehäuster Sensor) mit einem außen liegenden elektrischen Anschluss aufweist. Die Erfindung betrifft insbesondere einen derart ausgebildeten Drucksensor.

Als Sensor, analog, digital oder binär, wird allgemein ein Messgerät bezeichnet, welches eine oder mehrere auf zumindest einem physikalischen oder chemischen Effekt beruhende Variable hat, die in einem definierten, regelmäßig proportionalen, Verhältnis zu einer zu ermittelnden physikalischen oder chemischen Größe (Messgröße) steht. Beispiele für häufig verwendete Messgrößen sind etwa Druck, Temperatur, Durchfluss, Distanz, Füllstand, Länge, Lage, Feuchtigkeit, pH-Wert, stoffliche Beschaffenheit und vieles andere. Die Variable des Sensors ist dementsprechend eine physikalische oder chemische Eigenschaft des Sensors, die sich aufgrund der Messgröße im Sensor einstellt und in ein weiterverarbeitbares, regelmäßig elektrisches, Messsignal umgeformt wird. Das Messsignal kann analog oder digital und als Daten- und/oder Steuersignal ausgegeben werden. Die DE2350252 offenbart einen elektrochemischen Messfühler.

Ein gehäuster Sensor umfasst regelmäßig einen die Variable aufweisenden Messwertaufnehmer, eine Vorrichtung zur Erzeugung des Messsignals und dessen Übertragung. Er kann zudem eine oder mehrere Vorrichtungen zur Verarbeitung des Messsignals aufweisen. Diese Bestanteile sind von einem Gehäuse derart teilweise oder vollständig umhüllt, dass durch äußere Einflüsse die Funktionalität des Sensors nicht gestört und/oder Sensorbestandteile nicht geschädigt werden. Zur Ausgabe eines elektrischen Messsignals an externe Vorrichtungen weist das Gehäuse einen außen liegenden elektrischen Anschluss auf. Dieser ist innerhalb des Gehäuses mit den Vorrichtungen zur Erzeugung und gegebenenfalls Verarbeitung des Messsignals elektrisch verbunden.

Es besteht das allgemeine Erfordernis, dass der Anschluss kompatibel zu den Anschlüssen der externen Vorrichtungen und leicht mit diesen verbindbar sein soll sowie unter Messbedingungen einen sicheren und dauerhaften elektrischen Kontakt gewährleisten soll. Im Stand der Technik ist der Anschluss regelmäßig durch eine Buchse mit einem oder mehreren Pins ausgeführt, in welche ein korrespondierender Stecker der externen Vorrichtung steckbar ist.

Der Anschluss des erfindungsgemäßen Sensors ist durch eine Feder ausgebildet, oder mehrere davon, welche sich von einer Kontaktfläche im Inneren des Gehäuses (innere Kontaktfläche) durch die Gehäusewandung hindurch nach außen erstreckt und, beispielsweise mittels ein außerhalb des Gehäuses befindlichen Endes der Feder, eine äußere Kontaktfläche bildet. Mittels der Feder, die dafür einen elektrisch leitenden Pfad bereitstellt, sind die innere und die äußere Kontaktfläche auf geeignete Weise elektrisch miteinander verbindbar.

Der elektrische Kontakt zwischen der Feder und der inneren Kontaktfläche kann lösbar oder unlösbar ausgebildet sein. Letzteres erfolgt beispielsweise durch eine Lötverbindung, Ersteres beispielsweise durch eine mechanische Verbindung wie eine Klemm- oder Schraubverbindung. Auch ein loses Aufliegen der Feder auf der inneren Kontaktfläche ist möglich, wobei ein sicherer mechanischer und elektrischer Kontakt dann besteht, wenn die Feder auf Druck belastet ist.

Die Feder kann derart ausgebildet sein, dass sie im Zustand des elektrischen Kontakts mit einem Verbinder einer externen Vorrichtung auf Druck belastet ist. Alternativ kann sie vorgespannt sein, so dass zur Herstellung eines elektrischen Kontakts entspannt wird.

Die Feder kann sich in Abhängigkeit von der Anwendung des Sensors, dem Design der Feder oder aufgrund anderer Bedingungen auf verschiedene Weise durch die Gehäusewandung hindurch erstrecken. Beispielsweise kann ein Durchgang durch die Gehäusewandung oder eine Aussparung an einem Randbereich einer Gehäusekomponente ausgebildet sein. Oder ein Spalt zwischen Gehäusekomponenten kann genutzt oder entsprechend ausgebildet werden.

Als Feder soll hier entsprechend seiner allgemeinen Definition ein Konstruktionselement verstanden sein, welches Arbeit auf einem verhältnismäßig großen Weg aufnehmen und diese ganz oder teilweise als Formänderungsenergie speichern kann, um diese bei Entlastung ganz oder teilweise wieder abzugeben.

Material und Design der Feder sind, entsprechend den vorliegenden Mess- und Umgebungsbedingungen und dem Design des Sensors auf die Herstellung eines sicheren physischen und elektrischen Kontakts sowohl zur inneren Kontaktfläche als auch zum Verbinder der externen Vorrichtung ausgerichtet. Dem Fachmann stehen dafür verschiedenste Ausgestaltungen von Federn und verschiedenste Materialien zur Verfügung, von denen er geeignete auswählt.

Zur Ausbildung der elektrischen Verbindung zwischen innerer und äußerer Kontaktfläche kommen materialseitig neben Metallen auch leitfähig ausgebildete, elastische Kunststoffe oder Verbundmaterialien in Betracht. Weiter kann die Feder ganz oder zumindest im Bereich des elektrischen Kontakts mit Materialien beschichtet sein, welche einen geringen elektrischen Übergangswiderstand und geringe Korrosion aufweisen, wie etwa Edelmetalle.

Als Feder kommen in Abhängigkeit von der Gestaltung des Gehäusebauteils, durch welches die Feder hindurchragt, sowie von den Maßgaben des herzustellenden physischen und elektrischen Kontakts unterschiedliche Federgestalten in Betracht. Die Feder kann etwa als zylindrische, oder kegelige Schraubenfeder, als zylindrischer oder kegeliger Druckstab, als Blattfeder oder anders geformte Feder ausgebildet sein. Auch Federn mit gewölbtem Längsquerschnitt oder andere, auch wechselnde, Querschnitte sind möglich.

Die außerhalb des Gehäuses liegende Federkontaktfläche, welche eine äußere Kontaktfläche des Sensors bildet, kann zur Verbesserung der Kontaktfähigkeit durch Abplattung auf andere Weise vergrößert sein. Weiter kann in diesem Bereich der Feder Material verwendet sein, welches einen guten elektrischen Kontakt realisiert.

Geeignete Federformen, wie etwa eine auf Torsion beanspruchte Feder, können im Zuge der Herstellung des physischen Kontakts eine Reibung (Scratching) der aufeinandertreffenden Flächen bewirken, wodurch dünne Korrosionsschichten beseitigt werden können. Ein Scratching kann dann realisiert werden, wenn die Bewegung der Feder zur Erzeugung der Feder-Spannung und/oder zu deren Entlastung zwei voneinander abweichende Richtungskomponenten aufweist. Die erste Richtungskomponente soll dabei diejenige zur Spannung bzw. Entlastung der Feder sein, z. B. in Z-Richtung und die andere kann die X- oder Y-Richtung, so dass mit dem Auftreffen der äußeren Kontaktfläche der Feder auf den externen Kontakt ein Gleiten beider Kontaktpartner aufeinander erfolgt. Eine um einen Winkel von X oder Y abweichende Richtung ist nach den allgemeinen Regeln der Zusammensetzung einer Bewegungsbahn eingeschlossen, da auch eine solche Bewegungsbahn eine X- oder Y-Komponente einschließt. Der gleiche Effekt wird erzielt, wenn der externe Verbinder, mit welchem der Sensor kontaktiert werden soll, anstelle des Sensors bewegt wird.

Mittels Verwendung einer Feder als Kontaktelement kann sich die Neigung der äußeren Kontaktfläche an die Neigung der Kontaktfläche des Verbinders der externen Vorrichtung im Zuge der Herstellung des physischen Kontakts in Grenzen selbsttätig anpassen, wenn die Feder hinreichend weit aus dem Gehäuse ragt. Im letzten Fall wird der maximale Überstand der Feder über die Gehäusewandung und die maximal einstellbare Neigung dadurch bestimmt, dass die Feder nicht ausweicht und so kein reproduzierbarer Kontakt zustande kommt. Auch kann einer solchen Lage der äußeren Kontaktfläche ein Scratching ausgelöst werden.

Die innere Kontaktfläche kann einer Vorrichtung zur Erzeugung und Übertragung des Messsignals oder einer Vorrichtung zur Verarbeitung des Messsignals zugeordnet sein. Sie kann beispielsweise auf einem Board angeordnet sein, welches elektronische Bauelemente und/oder den Messwertaufnehmer aufweist sowie elektrische Leiter zur elektrischen Verbindung mit den Bauelementen und/oder mit dem Messwertaufnehmer.

Die Feder wird durch ein Führungselement entlang ihres im Verlauf der Formänderung zurückzulegenden Weges geführt, so dass die Feder entlang dieses Weges nicht ausweichen kann und ein reproduzierbarer physischer und elektrischer Kontakt erzielt wird. Das Führungselement kann im Inneren des Gehäuses oder außerhalb davon angeordnet sein. Das Führungselement kann in Abhängigkeit von der Bauform des Sensors auf verschiedene Weise im bzw. am Sensor ausgebildet sein. Es kann beispielsweise in der Gehäusewandung oder einer inneren Komponente des Sensors integriert sein. Alternativ kann es auch als separates Element realisiert sein.

Die Feder kann als verlierbares Bauteil des Sensors, als eine Alternative einer lösbaren Verbindung zur inneren Kontaktfläche, ausgebildet oder auf verschiedene Weise im Sensor gehalten sein. Sie kann beispielsweise lose im für die Feder ausgebildeten Durchgang, der Aussparung oder dem Schlitz o. a. am Sensor eingelegt sein oder durch seine Form darin verklemmt sein. Sie kann beispielsweise im Führungselement liegen. Auch eine Fixierung im Führungselement oder mittels lösbarer Haltemittel oder auf der inneren Kontaktfläche ist möglich.

Der Sensor kann mehrere derartiger, durch Federn realisierter Kontaktflächen aufweisen. Dies kann unterschiedlicher Belegung dienen, beispielsweise der Belegung mit dem Messsignal, mit Masse und der Versorgung und Steuerung des Sensors.

Das Gehäuse des Sensors ist entsprechend seiner Anwendung ausgebildet. Es hat regelmäßig einen Gehäusegrundkörper und einen Gehäusedeckel, welcher mit dem Gehäusegrundkörper verbunden ist. Diese können wiederum ein- oder mehrteilig und/oder zumindest teilweise durch andere Komponenten des Sensors ausgebildet sein. Das Gehäuse kann auch innere Komponenten umfassen, beispielsweise um im Inneren des Sensors Räume voneinander zu trennen.

Die Gestaltung der äußeren Kontaktfläche des Sensors mittels einer oder mehrerer Federn in den zuvor beschriebenen Ausgestaltungen ermöglicht es, dass eine Kontaktfläche des Verbinders einer externen Vorrichtung lediglich auf eine äußere Kontaktfläche aufgelegt wird, wodurch die Herstellung des Kontakts vereinfacht wird und auch an schwer zugänglichen Orten mit geringem Bauraum der Kontakt herstellbar ist. Sofern erforderlich können die beiden Verbindungspartner in der Kontaktposition lösbar oder dauerhaft fixiert werden, beispielsweise mittels am Gehäuse angeordnete Haltemittel.

Ein solcher Sensor ist beispielsweise als Drucksensor ausgebildet. Drucksensoren umfassen als wesentliche Komponenten ein Gehäuse mit einer Drucköffnung, an welchem das Medium anliegt, dessen Druck zu messen ist. Die bekannten Drucksensoren weisen regelmäßig als Drucköffnung einen in das Gehäuse ragenden Druckstutzen auf. Die Drucköffnung oder gegebenenfalls der Druckstutzen ist mit einem im Gehäuse angeordneten mikromechanischen Druckaufnehmer (Sensorchip) ausgestattet. Der Druckaufnehmer ist derart angeordnet, dass er die Drucköffnung einseitig verschließt, so dass darüber ein Druck direkt auf den Druckaufnehmer einwirkt.

Weiter kann der Druckaufnehmer zur elektrischen Kontaktierung mit einem elektrische Leiter aufweisenden Board verbunden sein. Auf Letzterem können zudem elektronische Bauelemente und optional ein integrierter Schaltkreis zur Aufbereitung der Messsignale auf dem Board angeordnet sein.

Der Sensor weist zur elektrischen Verbindung mit einer externen Vorrichtung äußere Kontakte auf, die mittels Federn gemäß voranstehender Beschreibung ausgebildet und mit inneren Kontaktfläche, die beispielsweise auf dem Board angeordnet sind, elektrisch verbunden sind.

Bei Drucksensoren ist häufig im Inneren des Gehäuses eine räumliche Unterteilung derart vorgenommen, dass dieser als Absolutdrucksensor oder Differenzdrucksensor (auch offen zum Umgebungsdruck) verwendbar ist und/oder bestimmte Komponenten im Sensor vor den physikalischen und chemischen Messbedingungen geschützt werden können.

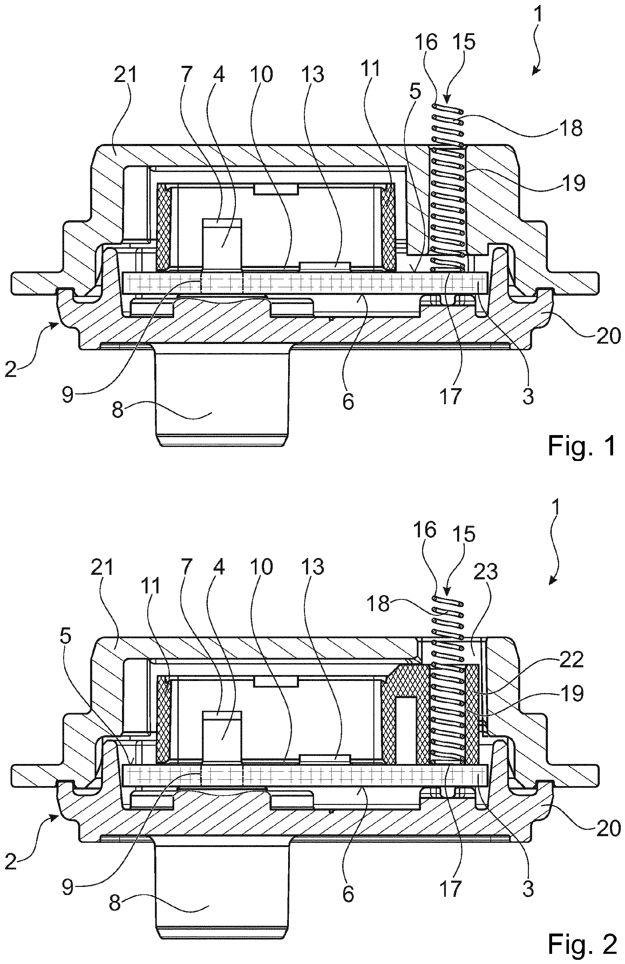

Die zugehörigen Fig. 1 und Fig. 2 zeigen alternative Ausführungsformen des zuvor beschriebenen Sensors am Beispiel von Drucksensoren.

Der in Fig. 1 in einem Schnitt dargestellte Drucksensor 1 umfasst ein Board 3, welches als Schaltungsträger fungiert und auf dessen einer Seite, nachfolgend als Vorderseite 5 bezeichnet, die weiteren Komponenten des Drucksensors 1 montiert und Strukturen von Leiterbahnen 10 ausgebildet sind, welche die einzelnen Komponenten elektrisch miteinander verbinden.

Das Board 3 weist einen Durchgang (nicht dargestellt), die Drucköffnung 9, auf. Über der Drucköffnung 9 ist auf einem Sockel 4 ein Messwertaufnehmer 7, im Ausführungsbeispiel ist das ein Druckaufnehmer 7, befestigt, so dass er die Drucköffnung 9 verschließt. Der Sockel 4 weist einen korrespondierenden Durchgang (nicht dargestellt) auf, so dass die Drucköffnung 9 auf der Rückseite 6 des Boards 3 mündet und im eingebauten Zustand des Drucksensors 1 zur Flüssigkeit hin offen ist.

Die Drucköffnung 9 und gegebenenfalls auch der Durchgang des Sockels sind durch die Membran des Druckaufnehmers 7 verschlossen. Somit wirkt ein über einen Druckstutzen 8 in der Drucköffnung 9 anliegendes Fluid auf die Membran des Druckaufnehmers 7. Alternativ ist der Drucksensor 1 auch mit einem anderen geeigneten Druckaufnehmer 7 ausführbar.

Zur Signalaufbereitung der von den Messwiderständen abgegriffenen Signale ist auf Vorderseite des Boards 3 eine geeignete integrierte Schaltung 13 montiert. Diese ist mit den Leiterbahnen 10 des Boards 3 elektrisch verbunden.

Der Druckaufnehmer 7 mit dem Sockel 4 sowie die integrierte Schaltung 13 sind von einem Rahmenelement 11 umschlossen, welches beispielsweise auf dem Board montiert ist und zum Schutz der elektronischen Bauteile mit einem mediumsresistenten und druckübertragendem Gel (nicht dargestellt) gefüllt sein kann.

Auf der Vorderseite 5 des Boards 3 sind des Weiteren innere Kontaktflächen 17 angeordnet (eine davon dargestellt), die ebenfalls mit den Leiterbahnen 10 im elektrischen Kontakt stehen und über diese mit der Integrierten Schaltung 13. Die inneren Kontaktflächen 17 sind im Ausführungsbeispiel außerhalb des Rahmenelements 11 angeordnet. Sofern das Druckregime und das anliegende Medium es zulassen, kann das Rahmenelement 11 entfallen und/oder die inneren Kontaktflächen 17 an anderer Stelle ausgebildet sein.

Zum mechanischen Schutz und insbesondere zum Schutz vor dem Angriff durch aggressive Fluide weist der Drucksensor 1 ein Gehäuse 2 auf, welches aus einem Gehäusedeckel 21 und einem Gehäuseboden 20 gebildet ist. Der Druckstutzen 8 ist am Gehäuseboden 20 ausgebildet. Gehäusedeckel 21 und Gehäuseboden 20 sind gegenüber dem umgebenden Medium dicht miteinander verbunden. Das Gehäuse 2 umschließt das Board 3 mit den darauf angeordneten Komponenten und besteht aus einem Material, das chemisch resistent gegenüber dem Fluid ist, mit der der Drucksensor 1 in Kontakt kommt.

Auf den inneren Kontaktflächen 17 steht jeweils eine metallische Feder 8. Im Ausführungsbeispiel ist das eine Schraubenfeder 18. Über die Standfläche der Schraubenfeder 18 besteht ein elektrischer Kontakt zwischen der inneren Kontaktfläche 17 und der Schraubenfeder 18. Die Schraubenfeder 18 bildet in Verbindung mit der inneren Kontaktfläche 17 einen elektrischen Anschluss 15 des Drucksensors 1, über welchen Signalübertragungen oder die elektrische Versorgung des Drucksensors 1 zu bzw. von externen Vorrichtungen realisiert werden.
Die Schraubenfeder 18 erstreckt sich durch einen Durchgang 19 im Gehäusedeckel 21 bis über dessen äußere Wandungsfläche hinaus. Der Querschnitt des Durchgangs 19 korrespondiert mit dem Querschnitt der Schraubenfeder 18 und ist nur geringfügig größer, so dass sich die Schraubenfeder 18 im Durchgang 19 gerade noch ungehindert bewegen kann. Der Durchgang 19 dient als Führungselement für die Schraubenfeder 18. Das außerhalb des Gehäuses liegende Ende der Schraubenfeder 18 stellt die äußere Kontaktfläche 16 des Sensors 1 dar.
Über die inneren und äußeren Kontaktflächen 17, 16 sind die von der integrierten Schaltung 13 aufbereiteten Signale des Druckaufnehmers 7 zu einer externen Vorrichtung übertragbar. Die Ausführungsform in Fig. 2 unterscheidet sich von der in Fig. 1 durch die Gestaltung des Führungselements. Dieses ist, ebenfalls als Durchgang 19, hier in einem verbreiterten Wandungsabschnitt 22 des Rahmenelements 11 ausgebildet. Der Durchgang 19 mündet an einer korrespondierenden Öffnung 23 im Gehäusedeckel 21, durch welchen sich die Schraubenfeder 18 bis außerhalb des Gehäuses 2 erstreckt.
Die Ausführungsbeispiele sind lediglich erläuternd und hinsichtlich Sensorart sowie Sensorausführung nicht beschränkend zu verstehen. Der Fachmann würde die vorstehend beschriebenen Merkmale in weiteren Ausführungsformen ohne weiteres auch anders als beschrieben miteinander kombinieren, wenn er dies als naheliegend und als sinnvoll erachtet. Die vorliegende Erfindung ist in den nachfolgenden Ansprüchen definiert.

### Bezugszeichenliste

- 1: Sensor, Drucksensor
- 2: Gehäuse
- 3: Board
- 4: Sockel
- 5: Vorderseite
- 6: Rückseite
- 7: Messwertaufnehmer, Druckaufnehmer
- 8: Druckstutzen
- 9: Drucköffnung
- 10: Leiterbahnen
- 11: Rahmenelement
- 13: integrierte Schaltung
- 15: elektrischer Anschluss
- 16: äußere Kontaktfläche
- 17: innere Kontaktflächen
- 18: Feder, Schraubenfeder
- 19: Durchgang
- 20: Gehäuseboden
- 21: Gehäusedeckel
- 22: Wandungsabschnitt
- 23: Öffnung

## Patentansprüche

1. Sensor zur Erfassung einer physikalischen oder chemischen Eigenschaft aus der Umgebung des Sensors (1), welcher zumindest folgende Komponenten aufweist: einen Messwertaufnehmer (7), eine Vorrichtung zur Erzeugung eines Messsignals und dessen Übertragung, ein Gehäuse (2) zum Schutz zumindest einer der genannten Komponenten, und zumindest einen außen liegenden elektrischen Anschluss zur Ausgabe eines elektrischen Messsignals, **dadurch gekennzeichnet, dass** der elektrische Anschluss durch eine Feder (18) in Verbindung mit einer Kontaktfläche im Inneren des Gehäuses (2), nachfolgend als innere Kontaktfläche (17) bezeichnet, ausgebildet ist, wobei sich die Feder (18) von der inneren Kontaktfläche (17) durch die Gehäusewandung hindurch erstreckt und außerhalb des Gehäuses (2) eine äußere Kontaktfläche (16) bildet, wobei mittels der Feder (18) ein elektrisch leitender Pfad zwischen der inneren Kontaktfläche (17) und äußeren Kontaktfläche (16) herstellbar ist.

2. Sensor nach Anspruch 1, **dadurch gekennzeichnet, dass** die Feder (18) aus einem metallischen Werkstoff oder einem elektrisch leitfähigen, elastische Kunststoffe oder einem Verbundmaterialien besteht und/oder zumindest abschnittsweise beschichtet ist.

3. Sensor nach einem der vorstehenden Ansprüche, **dadurch gekennzeichnet, dass** der elektrische Kontakt zwischen der Feder (18) und der inneren Kontaktfläche (17) lösbar oder unlösbar ausgebildet ist.

4. Sensor nach einem der vorstehenden Ansprüche, **dadurch gekennzeichnet, dass** die Feder (18) eine derartige Gestalt aufweist, dass deren Bewegung zur Herstellung der Spannung und/oder zur Entlastung zwei voneinander abweichende Richtungskomponenten aufweist.

5. Sensor nach einem der vorstehenden Ansprüche, **dadurch gekennzeichnet, dass** der Sensor (1) ein Führungselement aufweist, zur Führung der Feder (18) entlang eines im Verlauf der Formänderung zurückzulegenden Weges.

6. Sensor nach einem der vorstehenden Ansprüche, **dadurch gekennzeichnet, dass** die Feder (18) als verlierbares Bauteil des Sensors (1) ausgebildet oder aufgrund ihrer Gestalt im Sensor (1) gehalten ist.

7. Sensor nach einem der vorstehenden Ansprüche, **dadurch gekennzeichnet, dass** der elektrische Anschluss der Belegung des Sensors (1) mit Masse, der Übertragung des Messsignals oder der Spannungsversorgung und/oder Steuerung des Sensors (1) dient.

8. Sensor nach einem der vorstehenden Ansprüche, **dadurch gekennzeichnet, dass** der Sensor (1) ein Drucksensor ist, welcher ein Gehäuse (2) mit einer Drucköffnung, an welchem das Medium anliegt, dessen Druck zu messen ist, und einen Druckaufnehmer (7) aufweist, welcher die Drucköffnung einseitig verschließt.

## Claims

1. Sensor for detecting a physical or chemical property from the surroundings of the sensor (1), which has at least the following components: a measured value pickup (7), an apparatus for generating a measurement signal and for transmitting same, a housing (2) for protecting at least one of said components, and at least one outer-lying electrical connection for outputting an electrical measurement signal, **characterized in that** the electrical connection is formed by a spring (18) in connection with a contact area inside the housing (2), subsequently referred to as inner contact area (17), wherein the spring (18) extends from the inner contact area (17) through the housing wall and forms outside of the housing (2) an outer contact area (16), wherein an electrically conductive path between the inner contact area (17) and the outer contact area (16) is able to be produced by means of the spring (18).

2. Sensor according to Claim 1, **characterized in that** the spring (18) consists of a metal material or an electrically conductive, elastic plastic or a composite material and/or is coated at least in sections.

3. Sensor according to either of the preceding claims, **characterized in that** the electrical contact between the spring (18) and the inner contact area (17) is designed to be releasable or non-releasable.

4. Sensor according to one of the preceding claims, **characterized in that** the spring (18) has such a design that the movement thereof to produce the tension and/or to relieve load has two directional components different from one another.

5. Sensor according to one of the preceding claims, **characterized in that** the sensor (1) has a guide element for guiding the spring (18) along a route to be covered in the course of the change of shape.

6. Sensor according to one of the preceding claims, **characterized in that** the spring (18) is formed as a component part of the sensor (1) that is able to be lost or on account of the design thereof is held in the sensor (1).

7. Sensor according to one of the preceding claims, **characterized in that** the electrical connection serves to assign the sensor (1) to earth, to transmit the measurement signal or to supply voltage to and/or to control the sensor (1).

8. Sensor according to one of the preceding claims, **characterized in that** the sensor (1) is a pressure sensor, which comprises a housing (2) having a pressure opening to which the medium whose pressure is to be measured is applied, and a pressure pickup (7), which closes the pressure opening on one side.

## Revendications

1. Capteur destiné à détecter une propriété physique ou chimique dans l'environnement du capteur (1), lequel comporte au moins les composants suivants :
un détecteur de mesure (7), un dispositif destiné à générer un signal de mesure et à le transmettre, un boîtier (2) destiné à protéger au moins l'un desdits composants, et au moins une borne électrique externe destinée à délivrer un signal électrique de mesure, **caractérisé en ce que** la borne électrique est formée par un ressort (18) en liaison avec une surface de contact à l'intérieur du boîtier (2), ci-après désignée surface de contact interne (17), dans lequel le ressort (18) s'étend depuis la surface de contact interne (17) à travers la paroi du boîtier et forme une surface de contact externe (16) à l'extérieur du boîtier (2), dans lequel un trajet électriquement conducteur entre la surface de contact interne (17) et la surface de contact externe (16) peut être établi au moyen du ressort (18).

2. Capteur selon la revendication 1, **caractérisé en ce que** le ressort (18) est constitué et/ou est revêtu au moins par sections d'un matériau métallique ou d'une matière plastique élastique électriquement conductrice ou d'un matériau composite.

3. Capteur selon l'une des revendications précédentes, **caractérisé en ce que** le contact électrique entre le ressort (18) et la surface de contact interne (17) est conçu pour être amovible ou inamovible.

4. Capteur selon l'une des revendications précédentes, **caractérisé en ce que** le ressort (18) présente une forme telle que son mouvement qui est destiné à produire la tension et/ou à libérer la charge présente deux composantes directionnelles qui s'écartent l'une de l'autre.

5. Capteur selon l'une des revendications précédentes, **caractérisé en ce que** le capteur (1) comporte un élément de guidage destiné à guider le ressort (18) le long d'un trajet devant être parcouru au cours de la déformation.

6. Capteur selon l'une des revendications précédentes, **caractérisé en ce que** le ressort (18) est réalisé sous la forme d'un composant perdable du capteur (1) ou est maintenu dans le capteur (1) du fait de sa configuration.

7. Capteur selon l'une des revendications précédentes, **caractérisé en ce que** la borne électrique sert à la mise à la terre du capteur (1), à la transmission du signal de mesure ou à l'alimentation en tension et/ou à la commande du capteur (1).

8. Capteur selon l'une des revendications précédentes, **caractérisé en ce que** le capteur (1) est un capteur de pression, qui comporte un boîtier (2) avec une ouverture de pression à laquelle est appliqué le fluide à mesurer, et un détecteur de pression (7) qui referme d'un côté l'ouverture de pression.
